# EUROPÄISCHE PATENTSCHRIFT

(11) **EP 1 922 500 B1**
(45) Veröffentlichungstag und Bekanntmachung des Hinweises auf die Patenterteilung: **16.12.2009**
(21) Anmeldenummer: 06791890.4
(22) Anmeldetag: 07.09.2006
(51) Int. Cl.: F16H 61/22, F16H 59/10, F16H 61/24

(54) **ELEKTRISCHE SCHALTEINRICHTUNG FÜR EIN KRAFTFAHRZEUG**
ELECTRIC SHIFT UNIT FOR A MOTOR VEHICLE
DISPOSITIF ELECTRIQUE DE CHANGEMENT DE VITESSES POUR UN VEHICULE A MOTEUR

(30) Priorität: 09.09.2005 DE 102005043288
(43) Veröffentlichungstag der Anmeldung: 21.05.2008
(73) Patentinhaber: Leopold Kostal GmbH & Co. KG, 58507 Lüdenscheid (DE)
(72) Erfinder: BLECKMANN, Michael, 58239 Schwerte-Ergste (DE); MACHATZKE, Corinna, 58579 Schalksmühle (DE); MOLKOW, Peter, 44265 Dortmund (DE); LUKSCH, Thomas, 58579 Schalksmühle (DE)
(86) Internationale Anmeldenummer: PCT/EP2006/008711
(87) Internationale Veröffentlichungsnummer: WO 2007/028606

(56) Entgegenhaltungen:
- EP-A- 1 464 875
- US-A- 4 947 968

## Beschreibung

Die Erfindung betrifft eine elektrische Schalteinrichtung für ein Kraftfahrzeug, mit einem Schalthebel und mit einem elektrischen Aktuator, der einen Schaltanschlag für den Schalthebel in bzw. außer Kraft setzen kann.

Derartige Schalteinrichtungen werden bei Kraftfahrzeugen eingesetzt, die mit einem automatisierten Schaltgetriebe ausgerüstet sind. Dabei wird der eigentliche Schaltvorgang elektrohydraulisch oder elektromotorisch vorgenommen, während der jeweilige Schaltwunsch des Fahrers elektrisch oder elektronisch erfaßt wird. Dem Fahrer stehen bei einem solchen automatisierten Schaltgetriebe die elektrische Schalteinrichtung mit einem Schalthebel und gegebenenfalls zusätzlichen, etwa am Lenkrad angeordneten Wippschaltern zum Herauf- und Herunterschalten zur Verfügung.

Der Schalthebel einer solchen Schalteinrichtung kann multistabil oder auch monostabil ausgeführt sein, dass heißt, er kann entweder in mehrere feste Positionen einstellbar sein oder er besitzt, ähnlich einem Joystick nur eine stabile Ruheposition, in die der Schalthebel aus mehreren instabilen Stellpositionen immer wieder zurückfällt.

In beiden Fällen ist es wünschenswert oder sogar erforderlich, in Abhängigkeit vom aktuell gewählten Schaltzustand, jeweils bestimmte Schaltzustände von der nächsten Auswahl auszuschließen. Vorteilhaft ist es beispielsweise, bei einer linearen Kette möglicher Schaltzustände anzuzeigen, wenn die Auswahlmöglichkeiten in einer Schaltrichtung erschöpft sind.

Da im allgemeinen nicht nur die Erfassung sondern auch die Verarbeitung der jeweiligen Schaltzustände auf elektrischem oder elektronischem Weg abläuft, kann und wird im allgemeinen der Ausschluß bestimmter Umschaltmöglichkeiten durch die zugrundeliegende Schaltlogik erfolgen.

Allerdings ist es aus ergonomischen Gründen vorteilhaft, wenn der Bediener der Schalteinrichtung auch eine unmittelbare haptische Rückmeldung über derzeit nicht auswählbare Schaltfunktionen erhält. Eine solche Rückmeldung erhält der Fahrer eines Kraftfahrzeuges insbesondere über Sperren oder Anschläge, die mit dem Schalthebel zusammenwirken.

Aus der EP 1 464 875 A2 ist eine Schaltvorrichtung bekannt die alle Merkmale des Oberbegriffs des unabhängigen Anspruchs 1 aufweist. Diese Schaltvorrichtung verfügt über eine Betätigungseinrichtung, welche einen Schaltanschlag außer Kraft setzen kann, so dass der Schalthebel über die durch diesen Schaltanschlag definierte Schaltposition hinaus schwenkbar ist. Die EP 1 464 875 A2 offenbart hierzu eine relativ komplex aufgebaute Kipphebelanordnung, die durch mehrere unterscheidliche Aktuatoren betätigt wird.

Die elektrische Schalteinrichtung gemäß der vorliegenden Erfindung hat gegenüber dieser vorbekannten Einrichtung den Vorteil, durch Ansteuerung nur eines Aktuators den Betätigungsweg eines Schalthebels zu begrenzen, wobei die hierzu eingesetzten mechanischen Mittel einfach, robust und kostengünstig sind.

Dies wird erfindungsgemäß dadurch erreicht, dass ein zumindest zweistufiger Schieber senkrecht zu mindestens einer Auslenkungsrichtung des Schalthebels linear bewegbar angeordnet ist, der mittels des elektrischen Aktuators so positionierbar ist, dass jeweils eine seiner Stufen in der Auslenkungsrichtung des Schalthebels liegt, wodurch die Auslenkung des Schalthebels in unterschiedlichem Maße einschränkbar ist.

Der elektrisch ansteuerbare Aktuator ist dabei in einer bevorzugten Ausführung als Hubmagnet mit einer federbelasteten Rückstelleinrichtung ausgebildet.

Eine weitere vorteilhafte Ausführung des Aktuators ist durch einen sogenannten Piezomotor möglich. Ein solcher Motor umfasst einen Schwingungsgenerator, einen Resonanzkörper und ein durch diese antreibbares Bauteil. Der Schwingungsgenerator bildet dabei das aktive Element, welches aus einem piezoelektrischen Bauelement besteht, das durch hochfrequente elektrische Ansteuerung unter Ausnutzung des inversen piezoelektrischen Effekts zu Längenänderungen im (sub-) Mikrometerbereich angeregt wird. Diese schnellen Längenänderungen versetzen den Resonator in Schwingungen, durch die über eine Kontaktfläche mit einem antreibbaren Bauteil dieses in der gewünschten Richtung und Geschwindigkeit bewegt wird.

In einer ersten bevorzugten konstruktiven Ausgestaltung steuert der Aktuator den Schieber über eine Kulissenführung an. Diese Kulissenführung kann einen linearen oder auch einen nichtlinearen Verlauf haben kann, wodurch etwa ein bestimmter Kraft-Weg-Verlauf oder eine toleranzstabile Auslegung der Endlagen des Schiebers ermöglicht ist.

In einer zweiten bevorzugten konstruktiven Ausgestaltung steuert der Aktuator den Schieber über einen an seinem dem Schieber abgewandten Ende um eine zur Bewegungsrichtung des Schiebers senkrechte Achse drehbar gelagerten Betätigungshebel an. Durch die Wahl des Abstandes des Angriffspunktes des Aktuators von der Drehachse des Betätigungshebels lassen sich der erforderliche Weg und die Betätigungskraft des Aktuators variieren.

Eine Ausführung des Schiebers als U-förmiges Gebilde mit einem langen Schenkel, einer Freimachung und einem kurzen Schenkel ermöglicht insbesondere zusammen mit einer Auslegung des Aktuators in der Art, dass durch eine entsprechende Ansteuerung desselben eine gezielte Verlagerung des Schiebers in die eine oder andere seiner entgegengesetzten Endlagen möglich ist, und dass eine federbelastete Rückstelleinrichtung beim Wegfall der Bestromung den Schieber in seine mittlere Ruhelage zurückführt, eine gezielte Realisierung zweier unterschiedlicher Sperrstufen sowie einer Ausfallsicherheit der Schalteinrichtung.

Eine bevorzugte Anwendung einer elektrischen Schalteinrichtung besteht darin, Schaltwege eines monostabilen oder multistabilen Gangwahlschalters abhängig von der bereits eingelegten Fahrstufe zu sperren.

Weitere vorteilhafte Ausgestaltungen und Weiterbildungen der erfindungsgemäßen Schalteinrichtung werden anhand der Zeichnung erläutert werden.

Es zeigen:
- Figur 1: eine erfindungsgemäße Schalteinrichtung mit einer Ansteuerung des Schiebers durch einen Hubmagneten über eine Kulissenführung,
- Figur 2: eine erfindungsgemäße Schalteinrichtung mit einer Ansteuerung des Schiebers durch einen Hubmagneten über einen drehbaren Betätigungshebel

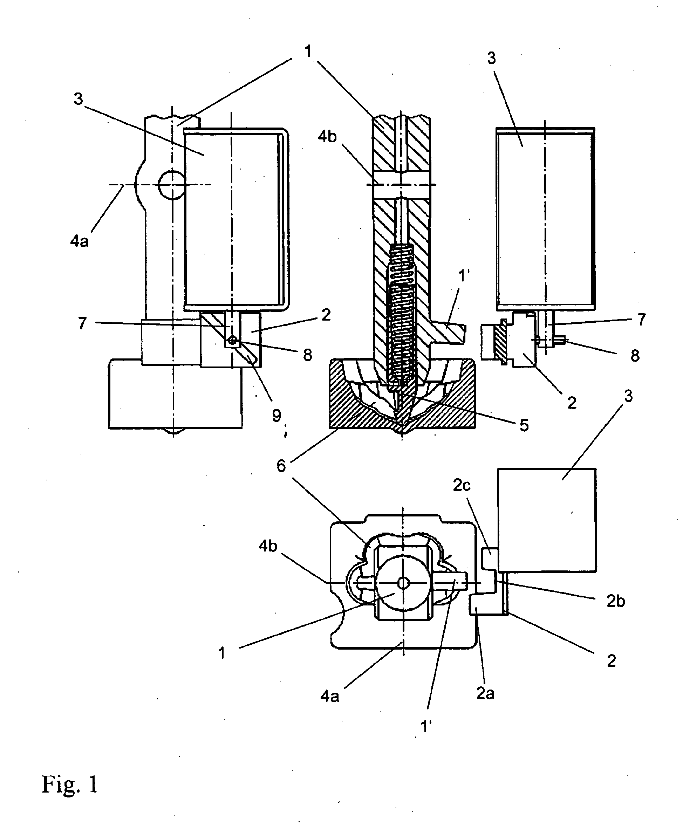

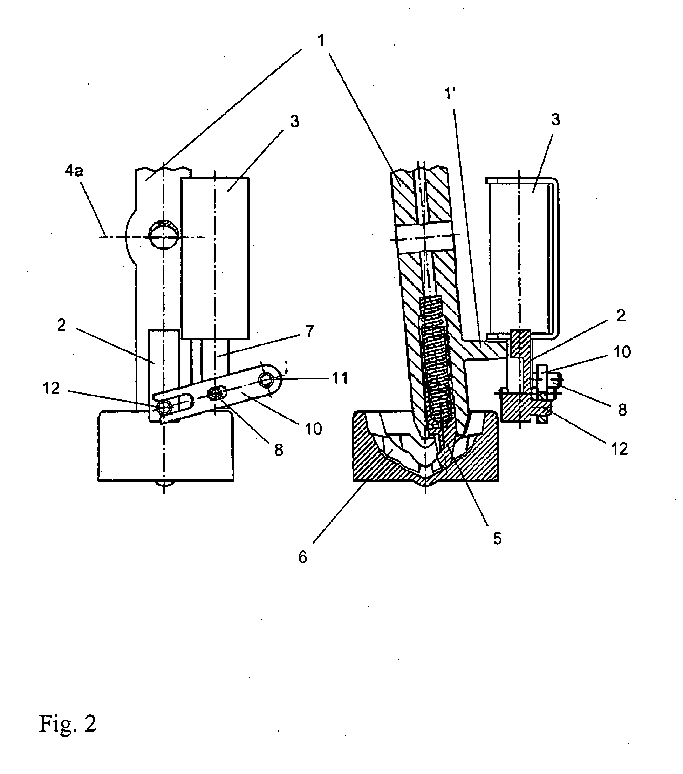

Die Darstellungen der Figuren 1 und 2 zeigen hierbei nur die zur Erläuterung der Erfindung wesentlichen Einzelheiten der Schalteinrichtungen in unterschiedlichen Ansichten bzw. Schnittdarstellungen. In den beiden Ausführungsbeispielen sind jeweils gleichwirkende Elemente mit gleichen Bezugszeichen bezeichnet.

Der Schalthebel 1 der elektrischen Schalteinrichtung ist um zwei zueinander senkrechte Achsen 4a und 4b drehbar gelagert. Um die Betätigungskräfte und Rastpositionen des Schalthebels 1 zu realisieren ist er an seinem unteren Ende mit einem federbelatstene Rastbolzen 5 versehen, welcher in einer dreidimensionalen Rastkurve 6 geführt ist.

Um die Auslenkung des Schalthebels bei einer Verschwenkung desselben um die Achse 4a in einer Richtung gezielt begrenzen zu können, ist in dieser Richtung ein in Form eines senkrecht zur dieser Auslenkungsrichtung des Schalthebels 1 bewegbaren Schiebers 2 ausgebildetes Begrenzungselement vorhanden. Der Schieber 2 ist in den hier dargestellten Ausführungsbeispielen jeweils als U-förmig ausgebildetes dreistufiges Element ausgeführt, welches einen längeren Schenkel 2a, einen kürzeren Schenkel 2c sowie dazwischen eine Freimachung 2b aufweist. Der Schalthebel ist mit einem in Richtung auf den Schieber 2 zu weisenden Fortsatz 1' versehen, welcher bei einer Verschwenkung des Schalthebels mit dem Schieber 2 kollidiert. Bei welchem Maß der Auslenkung des Schalthebels diese Kollision stattfindet, hängt dabei davon ab, ob der längere Schenkel 2a, der kürzere Schenkel 2c oder die dazwischenliegende Freimachung 2b des Schiebers diesem Fortsatz 1' gegenüber angeordnet ist. Die Freimachung 2b ermöglicht dabei die maximale Auslenkung des Schalthebels. Um die bei der Kollision des Schalthebels 1 mit dem Schieber 2 in den Schieber 2 eingeleiteten Kräfte aufzunehmen, ist der Schieber 2 in einem in der Zeichnung nicht dargestellten Gehäuse geführt, das eine in Gegenrichtung der eingeleiteten Betätigungskraft wirkende Abstützkraft bereitstellt.

Um die Verschwenkung des Schalthebels 1 der jeseiligen Schaltsituation entsprechend zu ermöglichen oder zu verhindern, ist der Schieber 2 mittels eines mit einer inseinem Gehäuse integrierten federbelasteten Rückstelleinrichtung versehenen Hubmagneten 3 relativ zu dem Schalthebel 1 positionierbar.

In dem Ausführungsbeispiel gemäß Fig. 1 wird der Schieber 2 dabei durch den Hubmagneten 3 über eine Kulissenführung angesteuert. Dabei läuft ein mit dem Stößel 7 des Hubmagneten 3 verbundener Stift 8 in einer in der dem Schalthebel 1 abgewandten Rückseite des Schiebers 2 eingeformten Kulissenbahn 9. Die Kulissenbahn9, die in der Zeichnung linear dargestellt ist, kann zur Erzielung eines bestimmten Kraft-Weg-Verlaufs oder zur toleranzstabilen Auslegung der Endlagen des Schiebers 2 auch mit einem nichtlinearen Verlauf versehen werden.

In dem Ausführungsbeispiel gemäß Fig. 2 wird der Schieber 2 durch den Hubmagneten 3 über einen Betätigungshebel 10 angesteuert, der an seinem dem Schieber 2 abgewandten Ende um eine zur Bewegungsrichtung des Schiebers 2 senkrechte Achse 11 drehbar gelagert ist. Der Schieber 2 ist dabei auf seiner dem Schalthebel 1 abgewandten Rückseite mit einem Stift 12 versehen, der in dem gabelfömig geöffneten achsfernen Ende des Betätigungshebels 10 geführt ist. Der Hubmagnet 3 greift mittels eines mit seinem Stößel 7 verbundenen Stiftes 8 in einer Öffnung des Betätigungshebels 10 zwischen dessen beiden Enden an. Je näher dieser Angriffspunkt an der Drehachse 11 des Betätigungshebels 10 liegt, desto geringer muß der Hub sein, den der Stößel 7 des Hubmagneten 3 auszuführen hat. Aufgrund der hiermit verbundenen Kraftübersetzung wird dazu allerdings eine höhere Betätigungskraft erforderlich.

In beiden Ausführungsbeispielen ist der Hubmagnet 3 so ausgelegt, dass durch eine entsprechend gepolte Bestromung desselben eine gezielte Verlagerung des Stößels 7 und damit auch des Schiebers 2 in die eine oder andere seiner entgegengesetzten Endlagen möglich ist, und dass die federbelastete Rückstelleinrichtung beim Wegfall der Bestromung den Stößel 7 und damit auch den Schieber 2 in seine mittlere Ruhelage zurückführt.

Damit ist es möglich, mittels des kurzen Schenkels 2c sowie des langen Schenkels 2a des Schiebers 2 gezielt eine erste sowie eine zweite Sperrstufe zu realisieren, wobei bei einem Ausfall des Hubmagenten 3 durch die in dessen Gehäuse integrierte federbelastete Rückstelleinrichtung sichergestellt ist, dass die Freimachung 2b gegenüber dem Schalthebel 1 bzw. dessen Fortsatz 1' positioniert ist, und somit ein unbehindertes Schalten ermöglicht ist.

Bei entsprechneder geometrischer Gestaltung des Schiebers 2 sowie des Schalthebels 1 bzw. des Fortsatzes 1' au diesem ist es auch möglich, den Schalthebel 1 aus einer eingenommenen Schaltposition, in welcher dieser durch die durch den federbelasteten Rastbolzen 5 und die dreidimensionale Rastkurve 6 gebildete Rasteinrichtung gehalten wird, gezielt wieder in seine Ruhelage zurückzuführen.

## Patentansprüche

1. Elektrische Schalteinrichtung für ein Kraftfahrzeug, mit einem Schalthebel (1) und mit einem elektrischen Aktuator, der einen Schaltanschlag für den Schalthebel (1) in bzw. außer Kraft setzen kann, **dadurch gekennzeichnet, dass** ein zumindest zweistufiger Schieber (2) senkrecht zu einer Auslenkungsrichtung des Schalthebels (1) linear bewegbar angeordnet ist, der mittels des elektrischen Aktuators so positionierbar ist, dass jeweils eine seiner Stufen (2a, 2b, 2c) in der Auslenkungsrichtung des Schalthebels (1) liegt, wodurch die Auslenkung des Schalthebels (1) in unterschiedlichem Maße einschränkbar ist.

2. Elektrische Schalteinrichtung nach Anspruch 1, **dadurch gekennzeichnet, dass** der elektrische Aktuator durch einen Hubmagneten (3) mit einer federbelasteten Rückstelleinrichtung gebildet ist.

3. Elektrische Schalteinrichtung nach Anspruch 2, **dadurch gekennzeichnet, dass** die federbelastete Rückstelleinrichtung in das Gehäuse des Hubmagneten (3) integriert ist.

4. Elektrische Schalteinrichtung nach Anspruch 1, **dadurch gekennzeichnet, dass** der elektrische Aktuator gebildet ist durch einen Piezomotor, welcher einen Schwingungsgenerator, einen Resonanzkörper sowie ein durch diese angetriebenes Bauteil umfasst.

5. Elektrische Schalteinrichtung nach einem der Ansprüche 1 bis 4, **dadurch gekennzeichnet, dass** der Aktuator den Schieber (2) über eine Kulissenführung ansteuert.

6. Elektrische Schalteinrichtung nach Anspruch 5, **dadurch gekennzeichnet, dass** die Kulissenbahn (9) der Kulissenführung einen nichtlinearen Verlauf hat.

7. Elektrische Schalteinrichtung nach einem der Ansprüche 1 bis 4, **dadurch gekennzeichnet, dass** der Aktuator den Schieber (2) über einen an seinem dem Schieber (2) abgewandten Ende um eine zur Bewegungsrichtung des Schiebers (2) senkrechte Achse (11) drehbar gelagerten Betätigungshebel (10) ansteuert.

8. Elektrische Schalteinrichtung nach einem der Ansprüche 1 bis 7, **dadurch gekennzeichnet, dass** der Schieber (2) in einem Gehäuse geführt ist, das die durch den Schalthebel (1) in den Schieber (2) eingeleiteten Kräfte aufnimmt.

9. Elektrische Schalteinrichtung nach einem der Ansprüche 1 bis 8, **dadurch gekennzeichnet, dass** der Schieber (2) U-förmig ausgebildet ist mit einem langen Schenkel (2a), einer Freimachung (2b) und einem kurzen Schenkel (2c).

10. Elektrische Schalteinrichtung nach Anspruch 7, **dadurch gekennzeichnet, dass** der Aktuator so ausgelegt ist, dass durch eine entsprechende Ansteuerung desselben eine gezielte Verlagerung des Schiebers (2) in die eine oder andere seiner entgegengesetzten Endlagen möglich ist, und dass eine federbelastete Rückstelleinrichtung beim Wegfall der Bestromung den Schieber (2) in seine mittlere Ruhelage zurückführt.

11. Elektrische Schalteinrichtung nach einem der Ansprüche 1 bis 10, **dadurch gekennzeichnet, dass** in dem unteren Ende des Schalthebels (1) ein federbelasteter Raststößel (5) aufgenommen ist, der in einer dreidimensionalen Rastkurve (6) geführt ist.

12. Elektrische Schalteinrichtung nach einem der Ansprüche 1 bis 11, **dadurch gekennzeichnet, dass** der Schalthebel (1) ein Gangwahlschalter ist.

13. Elektrische Schalteinrichtung nach einem der Ansprüche 1 bis 12, **dadurch gekennzeichnet, dass** durch eine Bewegung des Schiebers (2) die Position des Schalthebels (1) aktiv verändert werden kann.

14. Elektrische Schalteinrichtung nach Anspruch 13, **dadurch gekennzeichnet, dass** durch eine Bewegung des Schiebers (2) der ausgelenkte Schalthebel (1) in die neutrale Schalthebelposition zurückgestellt werden kann.

## Claims

1. Electrical switchgear for a motor vehicle with an switching lever (1) and with an electrical actuator that can activate or deactivate a shift stop for the switching lever (1), **characterised in that** a slider (2) with at least two steps is arranged in a linearly moveable manner perpendicular to an angle of deflection of the switching lever (1), and can be positioned by means of the electrical actuator in such a way that one of its steps (2a, 2b, 2c) is positioned in the direction of deflection of the switching lever (1) at any one time, as a result of which the deflection of the switching lever (1) can be restricted to a varying extent.

2. Electrical switchgear according to Claim 1, **characterised in that** the electrical actuator is formed by a lifting magnet (3) with a spring-loaded restoring device.

3. Electrical switchgear according to Claim 2, **characterised in that** the spring-loaded restoring device is integrated in the housing for the lifting magnet (3).

4. Electrical switchgear according to Claim 1, **characterised in that** the electrical actuator is formed by a piezoelectric motor comprising a vibration generator, a resonant body and an element driven by these.

5. Electrical switchgear according to any of Claims 1 to 4, **characterised in that** the actuator controls the slider (2) by way of a gate.

6. Electrical switchgear according to Claim 5, **characterised in that** the path (9) of the gate has a non-linear course.

7. Electrical switchgear according to any of Claims 1 to 4, **characterised in that** the actuator controls the slider (2) by way of an operating lever (10) which is on its end facing away from the slider (2) and is rotatably supported around an axis (11) that is perpendicular to the direction of movement of the slider (2).

8. Electrical switchgear according to any of Claims 1 to 7, **characterised in that** the slider (2) is guided in a housing that absorbs the forces discharged into the slider (2) by the switching lever (1).

9. Electrical switchgear according to any of Claims 1 to 8, **characterised in that** the slider (2) is of a U-shaped design with a long limb (2a), a clearance (2b) and a short limb (2c).

10. Electrical switchgear according to Claim 7, **characterised in that** the actuator is designed in such a manner that a specific displacement of the slider (2) to the one or the other of its opposing end positions is possible by means of appropriately controlling the same, and that a spring-loaded restoring device returns the slider (2) to its central idle position upon the energisation being discontinued.

11. Electrical switchgear according to any of Claims 1 to 10, **characterised in that** a spring-loaded snap-in tappet (5) guided in a three-dimensional latching curve (6) is accommodated in the bottom end of the switching lever (1).

12. Electrical switchgear according to any of Claims 1 to 11, **characterised in that** the switching lever (1) is a gear selector switch.

13. Electrical switchgear according to any of Claims 1 to 12, **characterised in that** the position of the switching lever (1) can be actively changed by a movement of the slider (2).

14. Electrical switchgear according to Claim 13, **characterised in that** the deflected switching lever (1) can be restored to its neutral operating lever position by means of a movement of the slider (2).

## Revendications

1. Dispositif de changement de vitesse électrique pour un véhicule automobile, avec un levier de changement de vitesse (1) et avec un actionneur électrique, qui peut mettre en service ou hors de service une butée pour le levier (1), **caractérisé en ce qu'**un coulisseau (2) à au moins deux saillies, disposé perpendiculairement à une direction de déplacement du levier de changement de vitesse (1), peut être mû linéairement, lequel coulisseau peut être positionné par l'actionneur de sorte que chaque fois l'une de ses saillies (2a, 2b, 2c) se trouve dans la direction de déplacement du levier de changement de vitesse (1), ce qui permet de limiter différemment le déplacement du levier de changement de vitesse (1).

2. Dispositif de changement de vitesse électrique selon la revendication 1, **caractérisé en ce que** l'actionneur électrique est formé par un électroaimant de levage (3) avec un dispositif de rappel commandé par ressort.

3. Dispositif de changement de vitesse électrique selon la revendication 2, **caractérisé en ce que** le dispositif de rappel commandé par ressort est intégré dans le boîtier de l'électroaimant de levage (3).

4. Dispositif de changement de vitesse électrique selon la revendication 1, **caractérisé en ce que** l'actionneur électrique est formé par un piézo-moteur, qui comprend un générateur de vibrations, un corps de résonance, ainsi qu'un élément entraîné par ceux-ci.

5. Dispositif de changement de vitesse électrique selon l'une des revendications 1 à 4, **caractérisé en ce que** l'actionneur excite le coulisseau (2) par l'intermédiaire d'un guidage à coulisse.

6. Dispositif de changement de vitesse électrique selon la revendication 5, **caractérisé en ce que** la voie de coulissement (9) du guidage à coulisse présente un cours non linéaire.

7. Dispositif de changement de vitesse électrique selon l'une des revendications 1 à 4, **caractérisé en ce que** l'actionneur excite le coulisseau (2) par l'intermédiaire d'un levier d'actionnement (10), qui est monté en rotation autour d'un axe (11) perpendiculaire à la direction de déplacement du coulisseau (2), à son extrémité opposée au coulisseau (2),

8. Dispositif de changement de vitesse électrique selon l'une des revendications 1 à 7, **caractérisé en ce que** le coulisseau (2) est guidé dans un carter, qui absorbe les forces exercées par le levier de changement de vitesse (1) dans le coulisseau (2).

9. Dispositif de changement de vitesse électrique selon l'une des revendications 1 à 8, **caractérisé en ce que** le coulisseau (2) est réalisé en forme de U, avec une branche longue (2a), un dégagement (2b) et une branche courte (2c).

10. Dispositif de changement de vitesse électrique selon la revendication 7, **caractérisé en ce que** l'actionneur est calculé de sorte qu'une excitation adéquate de celui-ci permette un déplacement ciblé du coulisseau (2) à destination de l'une ou de l'autre de ses positions finales opposées, et que, en l'absence de courant, un dispositif de rappel commandé par ressort ramène le coulisseau (2) à sa position médiane de repos.

11. Dispositif de changement de vitesse électrique selon l'une des revendications 1 à 10, **caractérisé en ce que,** dans l'extrémité inférieure du levier de commutation est (1), est logé un boulon d'arrêt (5), qui est guidé dans une gorge courbe d'arrêt (6) tridimensionnelle.

12. Dispositif de changement de vitesse électrique selon l'une des revendications 1 à 11, **caractérisé en ce que** le levier de changement de vitesse (1) est un levier sélecteur de vitesse.

13. Dispositif de changement de vitesse électrique selon l'une des revendications 1 à 12, **caractérisé en ce que** la position du levier de changement de vitesse (1) peut être modifiée activement par un mouvement du coulisseau (2).

14. Dispositif de changement de vitesse électrique selon la revendication 13, **caractérisé en ce que**, par un mouvement du coulisseau (2), le levier de changement de vitesse (1) déplacé peut être ramené à la position neutre dudit levier de changement de vitesse.
